# EUROPEAN PATENT SPECIFICATION

(11) **EP 0 781 253 B1**
(45) Date of publication and mention of the grant of the patent: **05.01.2000**
(21) Application number: 95931916.1
(22) Date of filing: 20.09.1995
(51) Int. Cl.: B67D 1/02, F16K 1/34

(54) **TAPPING FAUCET**
ZAPFKOPF
ROBINET DE SOUTIRAGE

(30) Priority: 23.09.1994 DK 110094
(43) Date of publication of application: 02.07.1997
(73) Proprietor: Rea ApS, 5450 Otterup (DK)
(72) Inventor: RASMUSSEN, Jorgen, DK-3450 Allerod (DK)
(74) Representative: Holme, Edvard
(86) International application number: DK9500376
(87) International publication number: WO9609243

(56) References cited:
- DE-A- 1 600 868
- DE-A- 2 627 891
- GB-A- 643 114
- GB-A- 815 385

## Description

The invention relates to a faucet for tapping of a liquid of the kind comprising partly a tubular valve casing, which defines a vertically extending axis when in normal position for use and at the side having a tubular liquids inlet, and below this a mounted spout, partly a movable valve mounted in the casing which by means of e.g. a handle can be raised to an upper position where the faucet is open and lowered to a lower position where the valve lies abuts against a valve seat in the casing and closes the faucet.

Tapping faucets are typically used for popular beverages as beer, which in public houses are stored under pressure of CO₂ in a container which through a tube and/or a pipe is connected to the liquid inlet of the tapping faucet. The beer is easily putrefied in atmospheric air, since the air's contents of oxygen determine the bacteria cultures living in the air. Beer is a foodstuff which for hygienic and health reasons must not be served in a condition where it is more or less infected and putrefied, and de tapping faucet and it's connecting pipe to the beer container must therefore often be washed out and cleaned with chemicals suitable for this purpose.

In a generally known type of faucet the faucet is opened and closed by means of a rotable plug. When the faucet is closed the plug blocks the beer stream while there on parts of the plug's surface and on the other surfaces of the interior of the spout are deposited beer residues which are exposed to the influence of the air and therefore will begin to putrefy when the faucet for some while has been out of function.

Another conventional type of faucet has a valve which can move axially up and down in the casing of the faucet and close against a valve seat being mounted somewhat up in the spout. In this case, too, beer residues will be deposited on the valve and in the interior of the spout when the faucet is closed, and with the same disadvantageous result for the foodstuff hygiene as was the case with the plug faucet.

Such a faucet is also known from German laid open publication nr. 1 600 868. Also in this case the valve seat is not extending totally down to the underside of the spout. Furthermore the packing of this construction does not fit tightly to the valve seat. On the contrary there is a spacing of 0,2 - 0,5 mm. When used for e.g. beer some of this will remain in the closed position of the faucet.

There is thus a need for a tapping faucet of the type mentioned in the opening paragraph being able to eliminate the conventionel tapping faucets' above mentioned problem to the effect that air can penetrate into a faucet and start a putrefactive process in the liquid residues which remain on the inner surfaces in the faucet when this latter is in closed position after having been in use for dispension of a liquid.

The novel and characteristic features according to the invention, in which this is obtained, is that the valve seat is extending down to the underside of the spout, that the valve is being made of an upper valve rod and a lower stream body, the end part of which having a complementary shape in relation to the valve seat.

When the faucet is open the beer stream itself will keep out of the air. When in closed position the beer will remain in the spout, but now without being exposed to the influence of the air, and the beer inside the faucet will therefore not be able to putrefy.

When the valve furthermore has a plane underside being on the same level as the underside of the spout and in the borderland between this and the seat fills it out completely, there can only be beer residues deposited on the faucet's outside which easily can be cleaned manually.

Efficient tightness between valve and valve seat is obtained by constructing the end part of the valve in an adequately hard plastic, e.g. teflon which is resistant to beer and other beverages.

It is important that the beer can stream through the spout without sudden changes in speed, otherwise the beer might foam unintendedly. The lower part of the valve rod can therefore with advantage be constructed as a drop-shaped stream body providing the speed of the stream to gradually be the speed with which the beer is to be dispensed.

At the top the valve extends through the casing to a connection with a handle for operating the valve. In order to avoid that air this way penetrates into the valve, the casing is at the top sealed with a threaded sleeve and the valve is led through this sleeve via a center opening with a sealing ring.

Below the sleeve there can furthermore be a chamber with a pre-tightened spring for the purpose, when in closed position, to keep the valve tightly against the valve seat, and in that case the chamber can then be held tightly closed against the underlying liquid filled part of the casing by means of a sealing disc which has a center opening with a sealing ring through which the valve rod is to be led.

The invention will be explained more fully by the following description of embodiments, which just serve as examples, with reference to the drawing, in which

Fig. 1 shows a cross section side-wise seen from one of the first embodiments of a faucet according to the invention in closed position.

Fig. 2 is the same, but in open position.

Fig. 3 is a cross section side-wise seen from a second embodiment of a faucet according to the invention in closed position, and

Fig. 4 is the same, but in open position

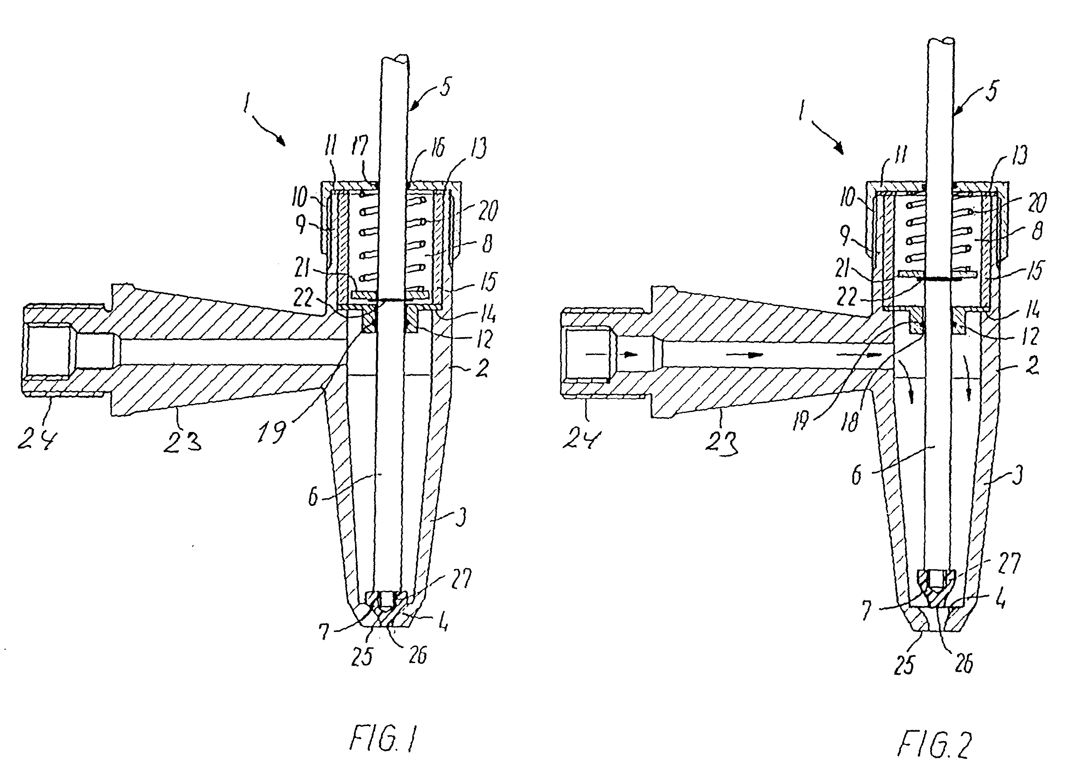

In fig. 1 and 2 a faucet can be seen according to the invention in a first embodiment. The faucet, which as a whole is referred to with the reference number 1, has a tubular valve casing 2 with a downwards turning spout 3 which at the bottom has a valve seat 4.

In the casing there is furthermore mounted a vertically movable valve 5 which consists of an upper valve rod 6 and a lower stream body 7.

The valve rod 6 extends at the top via a casing 2 into the open where the rod is connected to a handle (not shown) to slide the valve up and down between the open position as shown in fig. 2 and the closed position as shown in fig. 1.

The chamber 8 is situated in the upper part of the casing, which part is constructed as a neck ring 9 with an outside thread 10 in order to, with a seal 13 between, screw on a threaded end sleeve 11, which delimits the chamber 8 at the top. At the bottom the chamber 8 is delimited furthermore by a sealing disc 12, resting against an inside breast 14 in the casing. The sealing disc 12 is pressed tightly down against the breast when the threaded end sleeve 11 is fixed, and the compressive strength emerging through this operation is transmitted to the sealing disc via a distance ring 15.

The threaded end sleeve 11 has en opening 16 with an 0-ring 17, and the sealing ring 12 has an opening 18 with a second 0-ring 19. The valve rod 6 is due to the existence of the 0-rings 17 and 19 led through the openings 16 and 19 in the sealing disc 12 and the threaded end sleeve 11 respectively, and the chamber 8 will therefore always be shot to as well the outer milieu as the closed part of the casing which, when in use, always will be filled with a liquid.

In the chamber 8 there is a pre-tightened pressure spring 20 which at the top leans against the threaded end sleeve 11 and the bottom against a ring disc 21, which is fixed to the valve rod 6 by means of an open spring ring 22. The pressure spring's elastic force will consequently press the valve 5 down tightly against the valve seat 4 in the closing position of the faucet.

At the side between the spout 3 and the neck ring 9 the casing 2 has a tubular liquid inlet 23 with a thread neck ring meant for, via a tube or a pipe (not shown), connecting the faucet with a container (not shown) in which a beverage is stored under pressure, which beverage in the following, for example, is supposed to be beer.

The valve seat 4 has a double-crooked surface expedient for the stream extension through the spout, which surface reaches all the way down to the underside 25 of the spout. As shown, the lower stream body 7 of the valve has furthermore at the bottom a complementary surface in relation to the surface of the valve seat which latter surface fits tightly to the valve seat when the faucet is in the closing position as shown in fig. 1.

The stream body 7 has furthermore a plane underside 26 being at the same level as the underside of the spout 25 in the closing position of the faucet, whereby the underside of the spout and the free underside of the valve 26 are brought to form as smooth and unbroken surface which is easy to clean.

When a glass of beer is to be dispensed the valve will be raised by operating the handle not shown up to the position as shown in fig. 4 where the faucet is open.

The CO₂ overpressure standing in the beer container and which normally is reduced to a conveniently lower overpressure by means of a not shown reduction valve, which has been switched in after the beer container, will now press the beer via the not shown tube- or pipe connection up to the tubular liquid inlet 23.

The beer will then stream via the liquid inlet into the spout 3 and continue down through this and finally passing the open space between the valve seat 4 and the stream body 7 and leave the faucet 7 in a jet at the opening of the spout.

As long as the beer streams through the faucet in this way there will be no risk for air being able to penetrate the opposite way into the faucet. This risk will not occur until the faucet is closed and the beer stream is stopped, since atmospheric air not only can, but normally will penetrate into some part of conventional faucets' interior where the contents of oxygen in the air will be able to start a putrefactive process in the beer residues which necessarily will remain on spots which not immediately can be inspected and furthermore must be regarded as almost inaccessible to normal manual cleaning.

This significant disadvantages by the conventional faucets are efficiently relieved by means of the faucet according to the invention where the faucet is closed directly at the opening of the faucet and the atmospheric air is prevented from penetrating into the interior of the faucet.

After a dispension there can, of course, very well remain beer residues on the spout's outside which can, however, easily be surveyed and cleaned manually. This also applies for the critical area at the opening of the spout where the underside of the spout and the free underside of the valve, however, now from an area so smooth and unbroken as the rest of the surface of the spout.

Even if the faucet according to the invention thus normally gives full protection against putrefaction of beer or beer residues being in the interior of the faucet, the system should nevertheless be washed out and cleaned with chemicals. As a result of the smooth interior of the faucet no chemicals will be able to hide here and thus it is prevented that dispensed beer unintendedly will be consumed by a person who in this way could be more or less injured.

The previously mentioned lower sealing of the chamber 8 will furthermore secure this from being penetrated by chemicals.

The first embodiment shown in fig. 1 and 2 has a rather short stream body with an axial length of between 10 and 50% of the length of the spout. The complete stream body consists of a comparatively hard plastic, e.g. teflon, which with a threaded 5 assembling is screwed on to the smooth valve rod 6. This construction is especially simple and economic to produce.

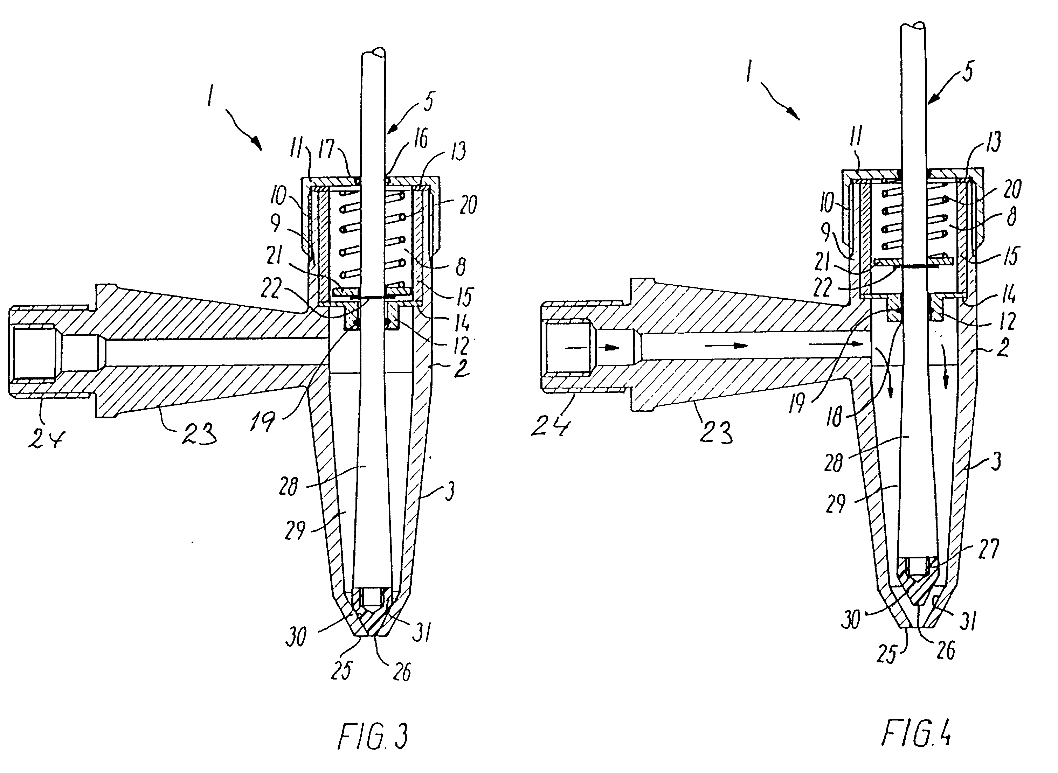

The second embodiment of the faucet according to the invention, as shown in fig. 3 and 4, is in principle constructed in the same ways as in the case in the first embodiment as shown in fig. 1 and 2. The construction and mode of operation of the faucet will consequently not be described in details again, as there in the following only is a description of the specific construction of the stream body and the advantages which are 5 attached to this construction. For equal parts there will each time be applied the same reference number as in fig. 1 and 2.

As shown, the stream body 28 has with this embodiment a greater length than is the case with the stream body 7 shown in fig. 1 and 2, that is a length of between 50 and 100% of the length of the spout.

At the same time the stream body is completely or approximately close to be drop-shaped whereby the beer stream is guided calmly through the spout at a speed increasing gradually and gently so that the beer will not foam unintendedly.

In order to easen the work the stream body in the shown example is only approximately being drop-shaped mainly consisting of a long upper cone 29 and a short lower cone 30.

The valve seat 31 is also constructed as a cone with the same conicity as the stream body 28's lower cone 30, and when the faucet is closed, as shown in fig. 3, the two cones will therefore fit tightly to each other and efficiently prevent atmospheric air from penetrating into the faucet.

The lower part of the stream body 28 consists of an individual plastic part which by a thread assembling 27 is screwed on to the rest of the stream body. The plastic which is used should preferably be rather hard. Teflon is an expedient material for this purpose and at the same time it is resistant to beer.

The description above of the tapping faucet according to the invention is made on the assumption that it is used for beer. This is, of course, only to be understood as an example, and the faucet can just as well be used for many other beverages, as e.g. soda water, cola and wine.

Furthermore the faucet will be suitable for many other liquids 5 which do not have to be drinkable, but nevertheless can putrefy under the influence of the air. This applies for certain types of oils.

## Claims

1. A faucet (1) for tapping of a liquid of the kind comprising partly a tubular valve casing (2), which defines a vertically extending axis when in normal position for use and at the side having a tubular liquid inlet (23), and below this a mounted spout (3), partly a movable valve (5) mounted in the casing (2) which by means of e.g. a handle can be raised to an upper position where the faucet (1) is open and lowered to a lower position where the valve (5) abuts against a valve seat (4) in the casing (2) and closes the faucet (1), **characterized** in that the valve seat (4) is extending down to the underside of the spout (3), that the valve (5) is being made of an upper valve rod (6) and a lower stream body (7), the end part of which having a complementary shape in relation to the valve seat (4).

2. A faucet (1) according to claim 1, **characterized** in that the stream body (7) is having a plane underside which, when the valve (5) is in its closing position, is at the same level as the underside (25) of the spout (3).

3. A faucet (1) according to claim 1 or 2, **characterized** in that the stream body (7) is having an axial extension of between 10 and 50% of the length of the spout (3).

4. A faucet (1) according to each of the claims 1-3, **characterized** in that the stream body (7) is having an axial extension of between 50 and 100% of the length of the spout (3).

5. A faucet (1) according to each of the claims 1 -4, **characterized** in that the stream body (7) is mainly drop-shaped.

6. A faucet (1) according to each of the claims 1 - 5, **characterized** in that the end part of the stream body (7) is made of a rather hard plastic.

7. A faucet (1) according to each of the claims 1- 6, **characterized** in that the casing (2) above the liquid inlet (23) has a chamber (8) with a pre-tightened pressure spring (20) which with an abutment on a radial projection of the valve rod (6) is acting on said valve rod (6) with a downwards force.

8. A faucet (1) according to each of the claims 1 - 7, **characterized** in that the chamber (8) is being sealed in relation to the other part of the casing (2) by means of a sealing disc (12) which by a distance ring (15) is pressed down against an interior breast (14) in the casing (2) by means of a screw cap (11), and that the valve rod (6) is led axially through the chamber (8) via a centre opening with sealing rings (17,19) in both the sealing disc (12) and the screw cap (11).

## Patentansprüche

1. Hahn (1) zum Abzapfen einer Flüssigkeit, teils mit einem rohrförmign Ventilgehäuse (2) mit einer in der normalen Gebrauchsstellung senkrechten Achse und einem seitlichen rohrförmigen Flüssigkeitseinlass (23) und teils einem im Gehäuse (2) montierten beweglichen Ventil (5), das beispielsweise mittels eines Handgriffs in eine obere offene Hahnstellung anhebbar und in eine untere Stellung absenkbar ist, in der das Ventil an einem Ventilsitz (4) im Gehäuse (2) anliegt und den Hahn (1) absperrt, **dadurch gekennzeichnet,** dass der Ventilsitz (4) sich bis zur Unterseite der Auslasstülle (3) abwärts erstreckt, und dass das Ventil (5) aus einer oberen Ventilstange und einem unteren Strömungskörper (7) besteht, dessen Endteil eine im Verhältnis zum Ventilsitz (4) komplementäre Form aufweist.

2. Hahn (1) nach Anspruch 1, **dadurch gekennzeichnet,** dass der Stromungskörper (7) eine ebene Unterseite aufweist, die sich bei geschlossenem Ventil (5) mit der Unterseite (25) der Auslasstülle (3) in gleicher Höhe befindet.

3. Hahn (1) nach Anspruch 1 oder 2, **dadurch gekennzeichnet,** dass die axiale Abmessung des Strömungskörpers (7) zwischen 10 und 50 % der Länge der Auslasstülle (3) beträgt.

4. Hahn (1) nach einem beliebigen der Ansprüche 1-3, **dadurch gekennzeichnet,** dass die axiale Abmessung des Strömungskörpers (7) zwischen 50 und 100 % der Länge der Auslasstülle (3) beträgt.

5. Hahn (1) nach einem beliebigen der Ansprüche 1-4, **dadurch gekennzeichnet,** dass der Strömungskörper (7) im wesentlichen tropfenförmig ausgebildet ist.

6. Hahn (1) nach jedem beliebigen der Ansprüche 1-5, **dadurch gekennzeichnet,** dass der Endteil des Strömungskörpers (7) aus einem ziemlich harten Kunststoff hergestellt ist.

7. Hahn (1) nach jedem beliebigen der Ansprüche 1-6, **dadurch gekennzeichnet,** dass das Gehäuse (2) oberhalb des Flüssigkeitseinlasses (23) eine Kammer (8) mit einer vorgespannten Druckfeder (20) hat, welche mittels eines Widerlagers an einem radialen Vorsprung der Ventilstange (6) das Ventil (5) mit einer abwärts gerichteten Kraft beaufschlagt.

8. Hahn (1) nach jedem beliebigen der Ansprüche 1-7, **dadurch gekennzeichnet,** dass die Kammer (8) zum übrigen Teil des Gehäuses (2) hin mittels einer Dichtungsscheibe (12) abgedichtet ist, die mittels eines Schaubdeckels (11) über einen Abstandsring (15) nach unten gegen einen inneren Bund (14) im Gehäuse (2) gedrückt wird, und dass die Ventilstange (6) über eine zentrale Öffnung mit Dicherungsringen (19, 17) in jeweils der Dichtungsscheibe (12) und im Schraubdeckel (11) axial durch die Kammer (8) geführt ist.

## Revendications

1. Cannelle (1) pour l'écoulement d'un liquide, du type comprenant, en partie, un boîtier de vanne tubulaire (2), qui définit un axe s'étendant verticalement lorsqu'il est en position normale d'utilisation, et comportant sur le côté une entrée (23) de liquide tubulaire, et sous ceci une goulotte montée (3), en partie, une vanne déplaçable (5) montée dans le boîtier (2) qui, au moyen par exemple d'une poignée, peut être soulevée jusqu'à une position supérieure lorsque la cannelle (1) est ouverte et baissée jusqu'à une position inférieure lorsque la vanne (5) vient en butée contre un siège de vanne (4) dans le boîtier (2) et ferme la goulotte (1), caractérisée en ce que le siège de vanne (4) s'étend vers le bas jusqu'au-dessous de la goulotte (3), en ce que la vanne (5) comprend une tige de vanne supérieure (6) et un corps d'écoulement inférieur (7), la partie d'extrémité duquel présentant une forme complémentaire de celle du siège (4) de vanne.

2. Cannelle (1) selon la revendication 1, caractérisée en ce que le corps d'écoulement (7) comporte un dessous plat qui, lorsque la vanne (5) est dans sa position de fermeture, est au même niveau que le dessous (25) de la goulotte (3) .

3. Cannelle (1) selon la revendication 1 ou 2, caractérisée en ce que le corps d'écoulement (7) comporte un prolongement axial de 10 à 50% de la longueur de la goulotte (3).

4. Cannelle (1) selon l'une quelconque des revendications 1 à 3, caractérisée en ce que le corps d'écoulement (7) comporte un prolongement axial de 50 à 100% de la longueur de la goulotte (3).

5. Cannelle (1) selon l'une quelconque des revendications 1 à 4, caractérisée en ce que le corps d'écoulement (7) est de façon générale en forme de goutte.

6. Cannelle (1) selon l'une quelconque des revendications 1 à 5, caractérisée en ce que la partie d'extrémité du corps d'écoulement (7) est fabriquée dans un plastique relativement dur.

7. Cannelle (1) selon l'une quelconque des revendications 1 à 6, caractérisée en ce que le boîtier (2) au-dessus de l'entrée (23) de liquide comporte une chambre (8) munie d'un ressort (20) de poussée précontraint qui, avec une butée ménagée sur une saillie radiale de la tige (6) de vanne, sollicite cette tige (6) de vanne avec une force dirigée vers le bas.

8. Cannelle (1) selon l'une quelconque des revendications 1 à 7, caractérisée en ce que la chambre (8) est maintenue en relation d'étanchéité par rapport à l'autre partie du boîtier (2) au moyen d'un disque d'étanchéité (12) qui, par un anneau (15) d'espacement, est poussé vers le bas contre une butée intérieure (14) agencée dans le boîtier (2) à l'aide d'un capuchon à vis (11), et en ce que la tige de vanne (6) est guidée axialement à travers la chambre (8) par l'intermédiaire d'une ouverture centrale avec des anneaux d'étanchéité (17, 19) agencés à la fois dans le disque d'étanchéité (12) et le capuchon à vis (11).
